# EUROPEAN PATENT SPECIFICATION

(11) **EP 2 724 057 B1**
(45) Date of publication and mention of the grant of the patent: **15.08.2018**
(21) Application number: 12804472.4
(22) Date of filing: 06.06.2012
(51) Int. Cl.: F16J 9/26, F16J 9/28, C08L 77/06, C08L 71/12, C08K 7/14

(54) **PISTON GUIDE RING COMPRISING POLYAMIDE-POLY(ARYLENE ETHER) COMPOSITION**
KOLBENFÜHRUNGSRING MIT EINER POLYAMID-POLY(ARYLENETHER)-ZUSAMMENSETZUNG
ANNEAU GUIDE DE PISTON COMPRENANT UNE COMPOSITION DE POLYAMIDE-POLY(ARYLÈNE ÉTHER)

(30) Priority: 27.06.2011 US 201113169148
(43) Date of publication of application: 30.04.2014
(73) Proprietor: SABIC Global Technologies B.V., 4612 PX Bergen op Zoom (NL)
(72) Inventor: TING, Sai-pei, Slingerlands, NY 12159 (US); GUO, Hua, Beijing 100000 (CN)
(74) Representative: Lang, Johannes
(86) International application number: PCT/US2012/041022
(87) International publication number: WO 2013/002977

(56) References cited:
- EP-A2- 0 401 518
- US-A- 4 432 925
- US-A- 4 840 379
- US-A- 5 132 182
- US-A1- 2005 271 481
- US-A1- 2009 306 273
- US-B2- 7 166 243
- US-B2- 7 449 507

## Description

### BACKGROUND OF THE INVENTION

Piston guide rings are components widely used in hydraulic equipment such as machine tools, truck, cranes, forklifts, handling machinery, and agriculture equipment to prevent metal-to-metal contact and to center the piston and rod for optimum sliding performance. Piston guide rings are tight tolerance parts, so they are normally manufactured in a two-step process that includes injection molding and post-molding machining to the required dimensions. Piston guide rings also require good dimensional stability for prolonged use at elevated temperatures, low coefficient of thermal expansion, low moisture absorption, high compressive strength, resistance to fatigue, and good compatibility with petroleum and mineral-based hydraulic fluids.

Polyamides, also known as nylons, are one of the materials commonly used to form piston guide rings for medium-duty and medium-to-high-duty hydraulic pistons. Polyamides are relatively low cost engineering thermoplastic resins having excellent chemical resistance to hydraulic fluids, good surface lubricity, and high mechanical strength and compressive strength when filled with glass fiber. However, polyamides absorb moisture from ambient air during storage and shipping. Piston guide rings may be manufactured in one country and shipped to one or more different countries for assembly of the hydraulic equipment. It has been observed that piston guide rings manufactured in a relatively low humidity location and installed in a relatively high humidity location may experience dimensional changes and warping that result in a high rejection rate for the piston guide rings during the equipment assembly process. The increased rejection rates decrease manufacturing efficiency and increase waste. There is therefore a desire for improved piston guide ring materials that preserve the advantages of polyamides while decreasing water absorption. There is also a desire for piston guide rings that exhibit more isotropic shrinkage on molding, thereby reducing the need for post-molding machining for low-duty and low-to-medium-duty hydraulic pistons. US 5 132 182 A discloses a process for chemically bonding a polyamide-containing thermoplastic material and a rubber which contains carboxyl groups, filler and peroxidic vulcanizing agents.

### BRIEF DESCRIPTION OF EMBODIMENTS OF THE INVENTION

One embodiment is a piston guide ring comprising a compatibilized polyamide-poly(arylene ether) blend; wherein the compatibilized polyamide-poly(arylene ether) blend comprises 35 to 95 parts by weight polyamide and 5 to 65 parts by weight poly(arylene ether), based on 100 parts by weight total of the polyamide and the poly(arylene ether); wherein the poly(arylene ether) comprises a copolymer of 2,6-dimethylphenol and 2,3,6-trimethylphenol.

Another embodiment is a piston-cylinder assembly, comprising: a cylinder comprising a cylinder inner wall, the cylinder inner wall defining a cylinder chamber; a piston slidably disposed within the cylinder chamber, the piston comprising a piston outer wall defining at least one groove in the piston; and at least one piston guide ring mounted in the at least one groove and comprising an outer surface slidably abutting the cylinder inner wall and an inner surface abutting the piston outer wall defining the groove; wherein the piston guide ring comprises a compatibilized polyamide-poly(arylene ether) blend; wherein the compatibilized polyamide-poly(arylene ether) blend comprises 35 to 95 parts by weight polyamide and 5 to 65 parts by weight poly(arylene ether), based on 100 parts by weight total of the polyamide and the poly(arylene ether); wherein the poly(arylene ether) comprises a copolymer of 2,6-dimethylphenol and 2,3,6-trimethylphenol.

These and other embodiments are described in detail below.

### BRIEF DESCRIPTION OF THE DRAWINGS

Figure 1 depicts a piston-cylinder assembly comprising two piston guide rings.
Figure 2 depicts guide rings with (a) a straight cut, (b) an angled cut, and (c) an "S" cut.
Figure 3 is a chemical scheme for the preparation of a poly(arylene ether) by oxidative polymerization of 2,6-dimethylphenol to yield poly(2,6-dimethyl-1,4-phenylene ether) and 3,3',5,5'-tetramethyldiphenoquinone; reequilibration of the reaction mixture can produce a poly(arylene ether) with terminal and internal residues of incorporated diphenoquinone.
Figure 4 is a stress versus strain curve for the compositions of Comparative Example 1 and Examples 1-8 at 23°C and 50% relative humidity, showing data for 0-10% strain.
Figure 5 is a stress versus strain curve for the compositions of Comparative Example 1 and Examples 1-8 at 100°C and 50% relative humidity, showing data for 0-10% strain.
Figure 6 is a stress versus strain curve for the compositions of Comparative Example 1 and Examples 1-8 at 130°C and 50% relative humidity, showing data for 0-10% strain.

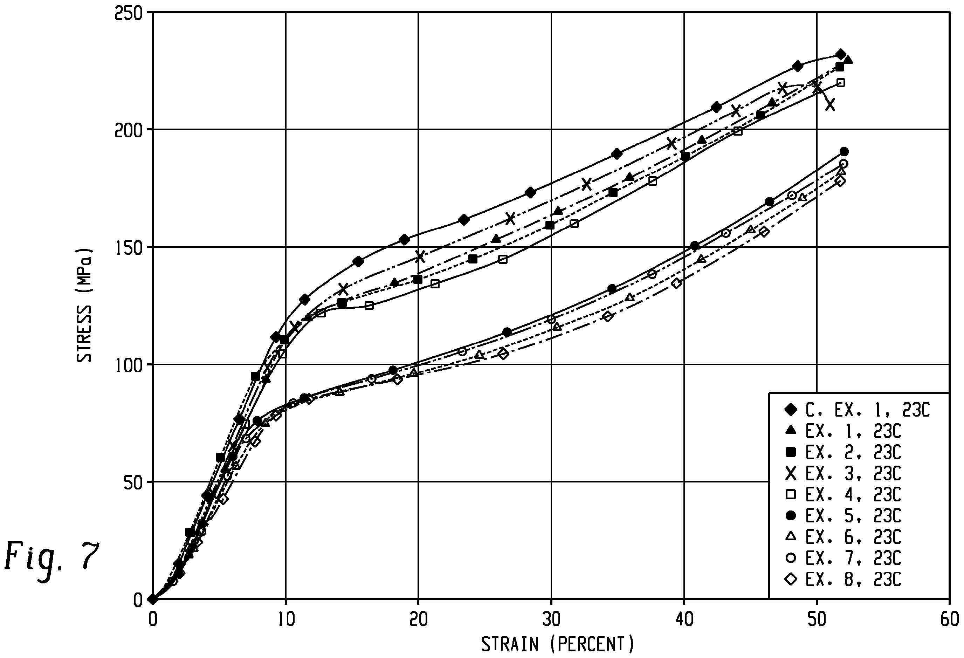

Figure 7 is a stress versus strain curve for the compositions of Comparative Example 1 and Examples 1-8 at 23°C and 50% relative humidity, showing data for 0-50% strain.

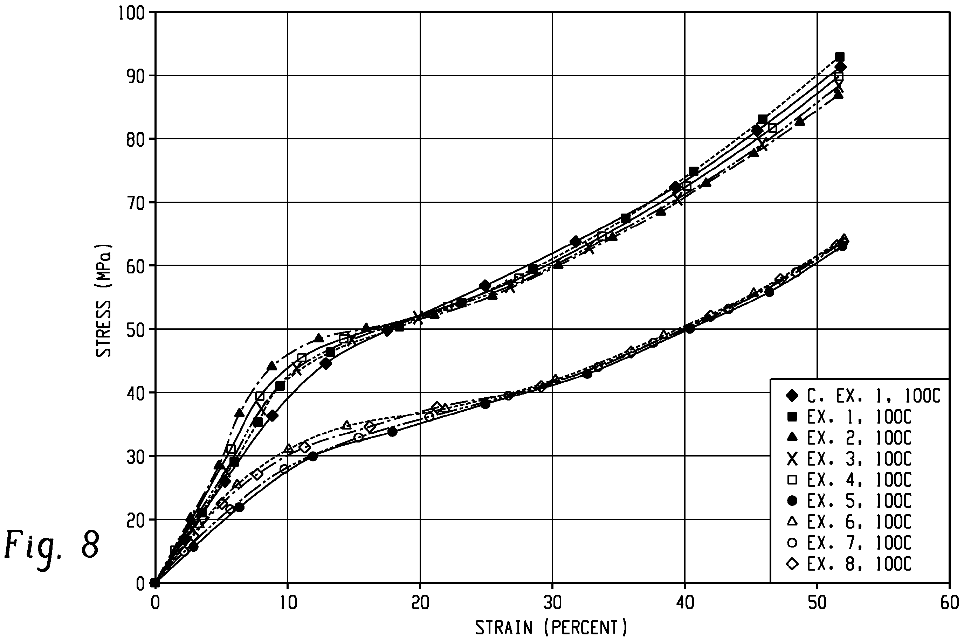

Figure 8 is a stress versus strain curve for the compositions of Comparative Example 1 and Examples 1-8 at 100°C and 50% relative humidity, showing data for 0-50% strain.

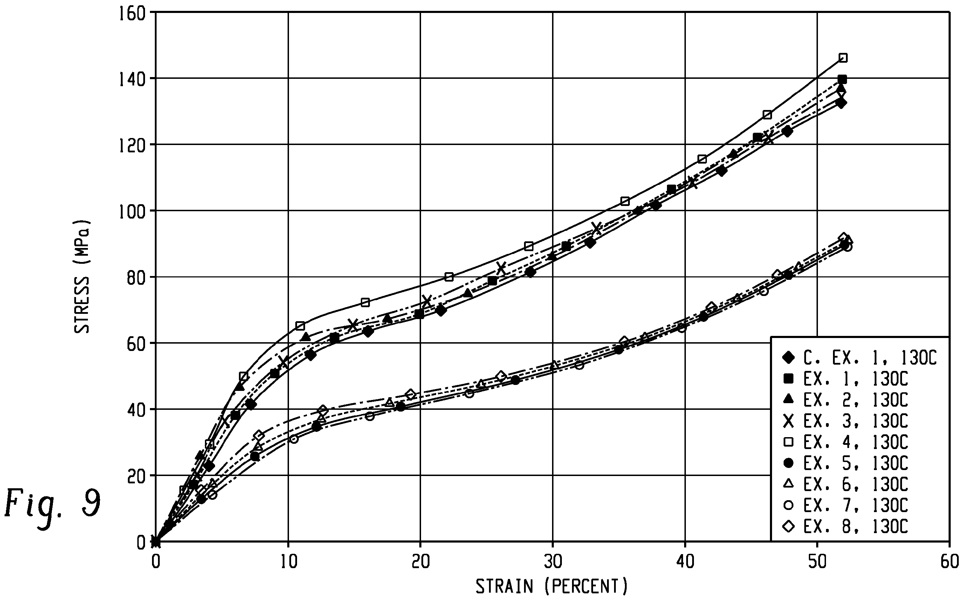

Figure 9 is a stress versus strain curve for the compositions of Comparative Example 1 and Examples 1-8 at 130°C and 50% relative humidity, showing data for 0-50% strain.
Figure 10 consists of scanning electron micrographs of Comparative Example 1 (images (a) and (b) at different magnifications) and Example 1 (images (c) and (d) at different magnifications).

### DETAILED DESCRIPTION OF THE INVENTION

The present inventors have determined that piston guide rings formed from a particular compatibilized polyamide-poly(arylene ether) blend offer advantages relative to piston guide rings formed from glass-filled polyamide. Specifically, the present piston guide rings provide improved compressive strength at elevated operating temperatures, more isotropic mold shrinkage, and reduced moisture absorption.

One embodiment is a piston guide ring comprising a compatibilized polyamide-poly(arylene ether) blend; wherein the compatibilized polyamide-poly(arylene ether) blend comprises 35 to 95 parts by weight polyamide and 5 to 65 parts by weight poly(arylene ether), based on 100 parts by weight total of the polyamide and the poly(arylene ether); wherein the poly(arylene ether) comprises a copolymer of 2,6-dimethylphenol and 2,3,6-trimethylphenol. Although the term "guide ring" is used herein for brevity, it will be understood that the compatibilized polyamide-poly(arylene ether) blend is also suitable for use in the formation of wear rings and other components intended to promote sliding and/or sealing of a piston in a cylinder. It will also be understood that although the word "ring" within the term "guide ring" typically indicates a circular cross-sectional shape, other cross-sectional shapes, including ovals, can also be used.

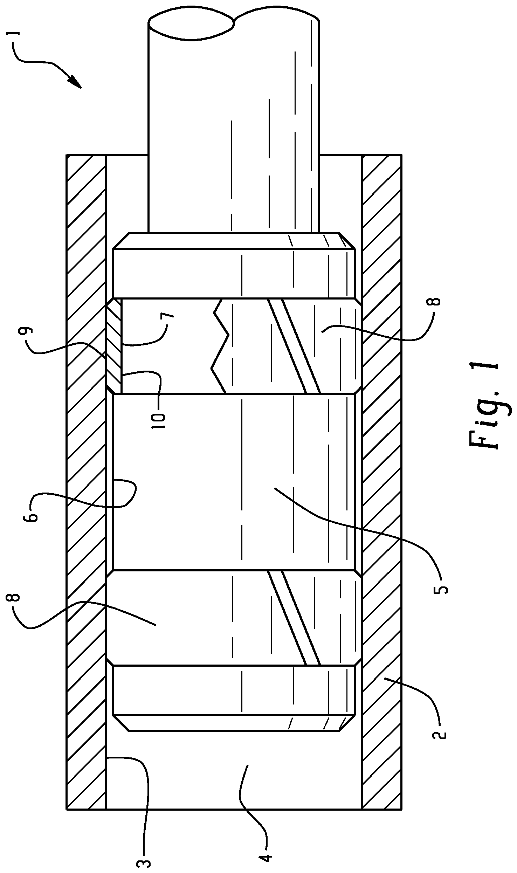

Figure 1 depicts a piston-cylinder assembly 1 comprising a cylinder 2 having a cylinder inner wall 3, the cylinder inner wall defining cylinder chamber 4. The piston-cylinder assembly 1 further includes a piston 5 slidably disposed within the cylinder chamber 4, the piston 5 having a piston outer wall 6 defining at least one groove 7 in the piston 5. At least one piston guide ring 8 is mounted in the at least one groove 7. The piston guide ring 8 has an outer surface 9 slidably abutting the cylinder inner wall 3, and an inner surface 10 abutting the piston outer wall 6 defining the groove 7.

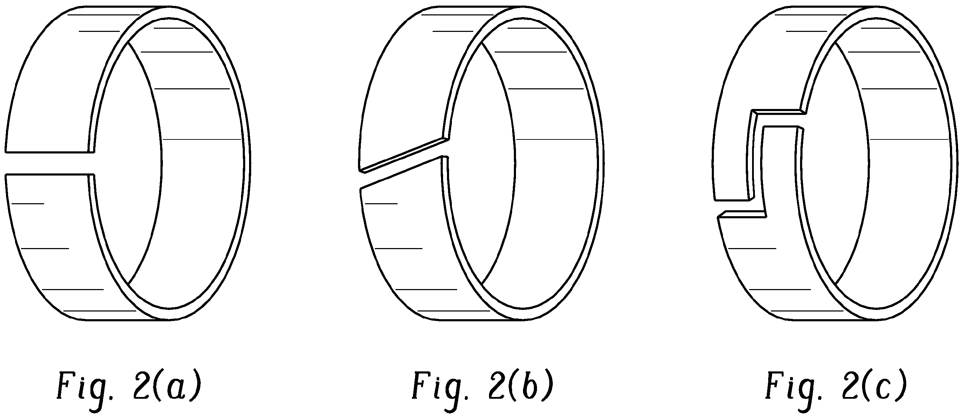

Figure 2 illustrates three embodiments of the guide ring structure, each with a different type of cut in the guide ring. In (a) the cut is straight, which may be preferred for reciprocating movements of the piston; in (b) the cut is angled, which may be preferred for rotating movements of the piston; and in (c) the cut is "S" shaped, which may be preferred when the guide ring provides sealing.

The piston guide ring comprises a compatibilized polyamide-poly(arylene ether) blend. As used herein, the expression "compatibilized polyamide-poly(arylene ether) blend" refers to a blends of polyamide and poly(arylene ether) that have been physically and/or chemically compatibilized with a compatibilizing agent, as well as blends of poly(arylene ether)s and polyamides that are physically compatible without such agents (as, for example, from compatibility-enhancing dibutylaminomethyl substituents on the poly(arylene ether)).

The compatibilized polyamide-poly(arylene ether) blend comprises a polyamide. Polyamides, also known as nylons, are characterized by the presence of a plurality of amide (-C(O)NH-) groups and are described in U.S. Patent No. 4,970,272 to Gallucci. The polyamide can be selected from aliphatic polyamides, aromatic polyamides, semi-aromatic polyamides, polyamide elastomers, and mixtures thereof. Specific polyamides include polyamide-6, polyamide-6,6, polyamide-4, polyamide-4,6, polyamide-12, polyamide-6,10, polyamide-6,9, polyamide-6,12, amorphous polyamides, polyamide-6/6T and polyamide-6,6/6T with triamine contents below 0.5 weight percent, polyamide-9T, and combinations thereof. In some embodiments, the polyamide comprises a polyamide-6, a polyamide-6,6, or a mixture thereof. In some embodiments, the polyamide comprises a polyamide-6,6. In some embodiments, the polyamide comprises a polyamide-6 and a polyamide-6,6. In some embodiments, the polyamide or combination of polyamides has a melting point (Tₘ) greater than or equal to 171°C. As described below, the compatibilized polyamide-poly(arylene ether) blend can, optionally, further contain an impact modifier. When the polyamide comprises a super tough polyamide, that is, a rubber-toughened polyamide, the compatibilized polyamide-poly(arylene ether) blend can, optionally, further contain a separate impact modifier. As described below, the Polyamides can be obtained by a number of well known processes such as those described in U.S. Patent Nos. 2,071,250, 2,071,251, 2,130,523, and 2,130,948 to Carothers; 2,241,322 and 2,312,966 to Hanford; and 2,512,606 to Bolton et al. Polyamides are commercially available from a variety of sources.

In some embodiments, the polyamide has an intrinsic viscosity of up to 400 milliliters per gram (mL/g) can be used, or, more specifically, having a viscosity of 90 to 350 mL/g, or, even more specifically, having a viscosity of 110 to 240 mL/g, as measured in a 0.5 weight percent solution in 96 weight percent sulfuric acid in accordance with ISO 307. The polyamide can have a relative viscosity of up to 6, or more specifically a relative viscosity of 1.89 to 5.43, or even more specifically a relative viscosity of 2.16 to 3.93. Relative viscosity is determined according to DIN 53727 in a 1 weight percent solution in 96 weight percent sulfuric acid.

In some embodiments, the polyamide comprises a polyamide having an amine end group concentration greater than or equal to 35 microequivalents amine end group per gram of polyamide (µeq/g) as determined by titration with HCl. The amine end group concentration can be greater than or equal to 40 µeq/g, or, more specifically, greater than or equal to 45 µeq/g. Amine end group content can be determined by dissolving the polyamide in a suitable solvent, optionally with heat. The polyamide solution is titrated with 0.01 Normal hydrochloric acid (HCl) solution using a suitable indication method. The amount of amine end groups is calculated based the volume of HCl solution added to the sample, the volume of HCl used for the blank, the molarity of the HCl solution, and the weight of the polyamide sample.

The compatibilized polyamide-poly(arylene ether) blend comprises the polyamide in an amount of 35 to 95 parts by weight, based on 100 parts by weight total of the polyamide and the poly(arylene ether). Within this range the polyamide amount can be about 40 to about 85 parts by weight, specifically about 45 to about 75 parts by weight.

In addition to the polyamide, the compatibilized polyamide-poly(arylene ether) blend comprises a poly(arylene ether).

The compatibilized polyamide-poly(arylene ether) blend comprises a poly(arylene ether). Suitable poly(arylene ether)s comprise a copolymer of 2,6-dimethylphenol and 2,3,6-trimethylphenol and include those comprising repeating structural units having the formula 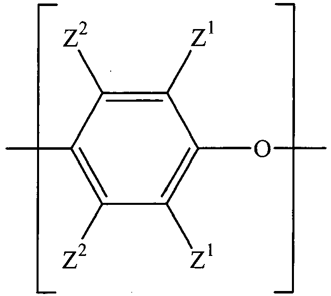 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

In some embodiments, the poly(arylene ether) has an intrinsic viscosity of about 0.25 to about 1 deciliter per gram measured at 25°C in chloroform. Within this range, the poly(arylene ether) intrinsic viscosity can be about 0.3 to about 0.65 deciliter per gram, more specifically about 0.35 to about 0.5 deciliter per gram, even more specifically about 0.4 to about 0.5 deciliter per gram.

In some embodiments, the poly(arylene ether) is characterized by a weight average molecular weight and a peak molecular weight, wherein a ratio of the weight average molecular weight to the peak molecular weight is about 1.3 : 1 to about 4:1. Within this range, the ratio can be about 1.5 : 1 to about 3:1, specifically about 1.5 : 1 to about 2.5 : 1, more specifically about 1.6 : 1 to about 2.3 : 1, still more specifically 1.7 : 1 to about 2.1 : 1. The poly(arylene ether) molecular weight distribution is typically analyzed in the molecular weight range from 250 to 1,000,000 atomic mass units. As used herein, the term "peak molecular weight" is defined as the most commonly occurring molecular weight in the molecular weight distribution. In statistical terms, the peak molecular weight is the mode of the molecular weight distribution. In practical terms, when the molecular weight is determined by a chromatographic method such as gel permeation chromatography, the peak molecular weight is the poly(arylene ether) molecular weight of the highest point in a plot of molecular weight on the x-axis versus absorbance on the y-axis. A detailed procedure for determining a molecular weight distribution using gel permeation chromatography is presented in the working examples.

In some embodiments, a poly(2,6-dimethyl-1,4-phenylene ether) is prepared with a morpholine-containing catalyst, wherein a purified sample of poly(2,6-dimethyl-1,4-phenylene ether) prepared by dissolution of the poly(2,6-dimethyl-1,4-phenylene ether) in toluene, precipitation from methanol, reslurry, and isolation has a monomodal molecular weight distribution in the molecular weight range of 250 to 1,000,000 atomic mass units, and comprises less than or equal to 2.2 weight percent of poly(2,6-dimethyl-1,4-phenylene ether) having a molecular weight more than fifteen times the number average molecular weight of the entire purified sample. In some embodiments, the purified sample after separation into six equal poly(2,6-dimethyl-1,4-phenylene ether) weight fractions of decreasing molecular weight comprises a first, highest molecular weight fraction comprising at least 10 mole percent of poly(2,6-dimethyl-1,4-phenylene ether) comprising a terminal morpholine-substituted phenoxy group. The poly(2,6-dimethyl-1,4-phenylene ether) according to these embodiments is further described in U.S. Patent Application Publication No. US 2011/0003962 A1 of Carrillo et al.

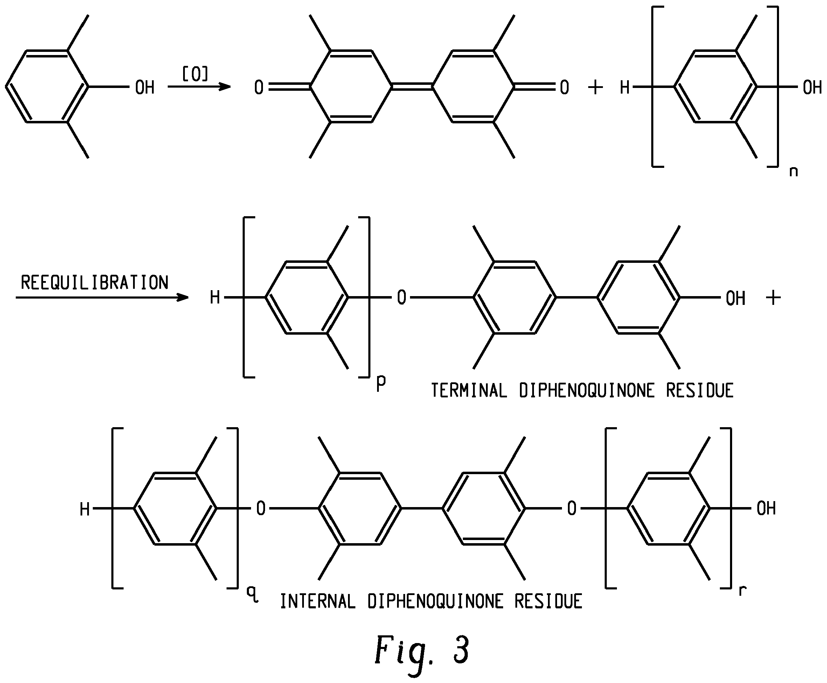

In some embodiments, the poly(arylene ether) is essentially free of incorporated diphenoquinone residues. In the context, "essentially free" means that the less than 1 weight percent of poly(arylene ether) molecules comprise the residue of a diphenoquinone. As described in U.S. Patent No. 3,306,874 to Hay, synthesis of poly(arylene ether) by oxidative polymerization of monohydric phenol yields not only the desired poly(arylene ether) but also a diphenoquinone as side product. For example, when the monohydric phenol is 2,6-dimethylphenol, 3,3',5,5'-tetramethyldiphenoquinone is generated. Typically, the diphenoquinone is "reequilibrated" into the poly(arylene ether) (i.e., the diphenoquinone is incorporated into the poly(arylene ether) structure) by heating the polymerization reaction mixture to yield a poly(arylene ether) comprising terminal or internal diphenoquinone residues. For example, as shown in Figure 3, when a poly(arylene ether) is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a poly(arylene ether) with terminal and internal residues of incorporated diphenoquinone.

However, such reequilibration reduces the molecular weight of the poly(arylene ether) (e.g., p and q+r are less than n). Accordingly, when a higher molecular weight poly(arylene ether) is desired, it may be desirable to separate the diphenoquinone from the poly(arylene ether) rather than reequilibrating the diphenoquinone into the poly(arylene ether) chains. Such a separation can be achieved, for example, by precipitation of the poly(arylene ether) in a solvent or solvent mixture in which the poly(arylene ether) is insoluble and the diphenoquinone is soluble. For example, when a poly(arylene ether) is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with about 1 to about 4 volumes of methanol or a methanol/water mixture. Alternatively, the amount of diphenoquinone side-product generated during oxidative polymerization can be minimized (e.g., by initiating oxidative polymerization in the presence of less than 10 weight percent of the monohydric phenol and adding at least 95 weight percent of the monohydric phenol over the course of at least 50 minutes), and/or the reequilibration of the diphenoquinone into the poly(arylene ether) chain can be minimized (e.g., by isolating the poly(arylene ether) no more than 200 minutes after termination of oxidative polymerization). These approaches are described in International Patent Application Publication No. WO2009/104107 A1 of Delsman et al. In an alternative approach utilizing the temperature-dependent solubility of diphenoquinone in toluene, a toluene solution containing diphenoquinone and poly(arylene ether) can be adjusted to a temperature of about 25°C, at which diphenoquinone is poorly soluble but the poly(arylene ether) is soluble, and the insoluble diphenoquinone can be removed by solid-liquid separation (e.g., filtration).

In some embodiments, the poly(arylene ether) comprises 2,6-dimethyl-1,4-phenylene ether units, and 2,3,6-trimethyl-1,4-phenylene ether units. In some embodiments, the poly(arylene ether) comprises a mixture of a homopolymer of 2,6-dimethylphenol and a copolymer of 2,6-dimethylphenol and 2,3,6-trimethylphenol. In some embodiments, a poly(2,6-dimethyl-1,4-phenylene ether) has an intrinsic viscosity of about 0.35 to about 0.5 deciliter per gram, specifically about 0.35 to about 0.46 deciliter per gram, measured at 25°C in chloroform. The poly(arylene ether) comprises a copolymer of 2,6-dimethylphenol and 2,3,6-trimethylphenol. In some embodiments, the copolymer of 2,6-dimethylphenol and 2,3,6-trimethylphenol can comprise about 5 to about 30 weight percent of 2,3,6-trimethyl-1,4-phenylene ether repeat units, and about 70 to about 95 weight percent of 2,6-dimethyl-1,4-phenylene ether repeat units.

The poly(arylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(arylene ether) can be in the form of a homopolymer, a copolymer, a graft copolymer, an ionomer, or a block copolymer, as well as combinations comprising at least one of the foregoing.

The compatibilized polyamide-poly(arylene ether) blend comprises the poly(arylene ether) in an amount of 5 to 65 parts by weight, based on 100 parts by weight total of the polyamide and the poly(arylene ether). Within this range, the poly(arylene ether) amount can be about 15 to about 60 parts by weight, specifically about 20 to about 55 parts by weight.

In some embodiments, a compatibilizing agent is used to facilitate formation of a compatibilized blend of the polyamide and the poly(arylene ether). As used herein, the term "compatibilizing agent" refers to a polyfunctional compound that interacts with the poly(arylene ether), the polyamide, or both. This interaction can be chemical (for example, grafting) and/or physical (for example, affecting the surface characteristics of the dispersed phases). In either instance the resulting polyamide-poly(arylene ether) blend exhibits improved compatibility, particularly as evidenced by enhanced impact strength, mold knit line strength, and/or tensile elongation. As used herein, the expression "compatibilized blend" refers to compositions that have been physically and/or chemically compatibilized with a compatibilizing agent, as well as blends of poly(arylene ether)s and polyamides that are compatibilized without the use of a compatibilizing agent, as is the case, for example, when compatibilization is derived from compatibility-enhancing dibutylaminomethyl substituents on the poly(arylene ether).

Examples of compatibilizing agents that can be employed include liquid diene polymers, epoxy compounds, oxidized polyolefin wax, quinones, organosilane compounds, polyfunctional compounds, functionalized poly(arylene ether)s, and combinations thereof. Compatibilizing agents are further described in U.S. Patent Nos. 5,132,365 to Gallucci, and 6,593,411 and 7,226,963 to Koevoets et al.

In some embodiments, the compatibilizing agent comprises a polyfunctional compound. Polyfunctional compounds that can be employed as a compatibilizing agent are typically of three types. The first type of polyfunctional compound has in the molecule both (a) a carbon-carbon double bond or a carbon-carbon triple bond and (b) at least one carboxylic acid, anhydride, amide, ester, imide, amino, epoxy, orthoester, or hydroxy group. Examples of such polyfunctional compounds include maleic acid; maleic anhydride; fumaric acid; glycidyl acrylate, itaconic acid; aconitic acid; maleimide; maleic hydrazide; reaction products resulting from a diamine and maleic anhydride, maleic acid, fumaric acid, etc.; dichloro maleic anhydride; maleic acid amide; unsaturated dicarboxylic acids (for example, acrylic acid, butenoic acid, methacrylic acid, ethylacrylic acid, pentenoic acid, decenoic acids, undecenoic acids, dodecenoic acids, linoleic acid, etc.); esters, acid amides or anhydrides of the foregoing unsaturated carboxylic acids; unsaturated alcohols (for example, alkanols, crotyl alcohol, methyl vinyl carbinol, 4-pentene-1-ol, 1,4-hexadiene-3-ol, 3-butene-1,4-diol, 2,5-dimethyl-3-hexene-2,5-diol, and alcohols of the formula CₙH₂ₙ₋₅OH, CₙH₂ₙ₋₇OH and CₙH₂ₙ₋₉OH, wherein n is a positive integer less than or equal to 30); unsaturated amines resulting from replacing from replacing the -OH group(s) of the above unsaturated alcohols with -NH₂ group(s); functionalized diene polymers and copolymers; and combinations comprising one or more of the foregoing. In one embodiment, the compatibilizing agent comprises maleic anhydride and/or fumaric acid.

The second type of polyfunctional compatibilizing agent has both (a) a group represented by the formula (OR) wherein R is hydrogen or an alkyl, aryl, acyl or carbonyl dioxy group and (b) at least two groups each of which can be the same or different selected from carboxylic acid, acid halide, anhydride, acid halide anhydride, ester, orthoester, amide, imido, amino, and various salts thereof. Typical of this group of compatibilizing agents are the aliphatic polycarboxylic acids, acid esters, and acid amides represented by the formula:

(R^{I}O)ₘR'(COOR^{II})ₙ(CONR^{III}R^{IV})ₛ

wherein R' is a linear or branched chain, saturated aliphatic hydrocarbon having 2 to 20, or, more specifically, 2 to 10, carbon atoms; R^{I} is hydrogen or an alkyl, aryl, acyl, or carbonyl dioxy group having 1 to 10, or, more specifically, 1 to 6, or, even more specifically, 1 to 4 carbon atoms; each R^{II} is independently hydrogen or an alkyl or aryl group having 1 to 20, or, more specifically, 1 to 10 carbon atoms; each R^{III} and R^{IV} are independently hydrogen or an alkyl or aryl group having 1 to 10, or, more specifically, 1 to 6, or, even more specifically, 1 to 4, carbon atoms; m is equal to 1 and (n + s) is greater than or equal to 2, or, more specifically, equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III}, and R^{IV} cannot be aryl when the respective substituent has less than 6 carbon atoms.

Suitable polycarboxylic acids include, for example, citric acid, malic acid, and agaricic acid, including the various commercial forms thereof, such as for example, the anhydrous and hydrated acids; and combinations comprising one or more of the foregoing. In one embodiment, the compatibilizing agent comprises citric acid. Illustrative of esters useful herein include, for example, acetyl citrate, monostearyl and/or distearyl citrates, and the like. Suitable amides useful herein include, for example, N,N'-diethyl citric acid amide; N-phenyl citric acid amide; N-dodecyl citric acid amide; N,N'-didodecyl citric acid amide; and N-dodecyl malic acid. Derivatives include the salts thereof, including the salts with amines and the alkali and alkaline metal salts. Examples of suitable salts include calcium malate, calcium citrate, potassium malate, and potassium citrate.

The third type of polyfunctional compatibilizing agent has in the molecule both (a) an acid halide group and (b) at least one carboxylic acid, anhydride, ester, epoxy, orthoester, or amide group, preferably a carboxylic acid or anhydride group. Examples of compatibilizing agents within this group include trimellitic anhydride acid chloride, chloroformyl succinic anhydride, chloroformyl succinic acid, chloroformyl glutaric anhydride, chloroformyl glutaric acid, chloroacetyl succinic anhydride, chloroacetylsuccinic acid, trimellitic acid chloride, and chloroacetyl glutaric acid. In one embodiment, the compatibilizing agent comprises trimellitic anhydride acid chloride.

The foregoing compatibilizing agents can be added directly to the melt blend or pre-reacted with either or both of the poly(arylene ether) and the polyamide, as well as with any other resinous materials employed in the preparation of the compatibilized polyamide-poly(arylene ether) blend. With many of the foregoing compatibilizing agents, particularly the polyfunctional compounds, even greater improvement in compatibility is found when at least a portion of the compatibilizing agent is pre-reacted, either in the melt or in a solution of a suitable solvent, with all or a part of the poly(arylene ether). It is believed that such pre-reacting may cause the compatibilizing agent to react with and consequently functionalize the poly(arylene ether). For example, the poly(arylene ether) can be pre-reacted with maleic anhydride to form an anhydride-functionalized poly(arylene ether) that has improved compatibility with the polyamide compared to a non-functionalized poly(arylene ether).

When a compatibilizing agent is employed in the preparation of the compatibilized polyamide-poly(arylene ether) blend, the amount used will be dependent upon the specific compatibilizing agent chosen and the specific polymeric system to which it is added. In some embodiments, the compatibilizing agent amount is about 0.1 to about 1 weight percent, specifically about 0.2 to about 0.8 weight percent, more specifically about 0.3 to about 0.6 weight percent, based on the total weight of the compatibilized polyamide-poly(arylene ether) blend.

In some embodiments, the compatibilized polyamide-poly(arylene ether) blend comprises glass fibers. Suitable glass fibers include those based on E, A, C, ECR, R, S, D, and NE glasses, as well as quartz. The glass fiber can have a diameter of about 2 to about 30 micrometers, specifically about 5 to about 25 micrometers, more specifically about 5 to about 15 micrometers. The length of the glass fibers before compounding can be about 2 to about 7 millimeters, specifically about 1.5 to about 5 millimeters. Alternatively, longer glass fibers or continuous glass fibers can be used. The glass fiber can, optionally, include an adhesion promoter to improve its compatibility with the polyamide, the poly(arylene ether), or both. Adhesion promoters include chromium complexes, silanes, titanates, zirco-aluminates, propylene maleic anhydride copolymers, reactive cellulose esters and the like. Suitable glass fiber is commercially available from suppliers including, for example, Owens Corning, Nippon Electric Glass, PPG, and Johns Manville. When present, the glass fibers are used in an amount of 1 to 50 weight percent glass fibers, based on the total weight of the compatibilized polyamide-poly(arylene ether) blend. Within this range, the glass fiber amount can be about 5 to about 50 weight percent, specifically about 10 to about 40 weight percent, more specifically about 15 to about 30 weight percent.

In some embodiments, the compatibilized polyamide-poly(arylene ether) blend excludes glass fibers.

The compatibilized polyamide-poly(arylene ether) blend can, optionally, include hollow glass beads. The hollow glass beads can have a volume-average diameter of about 20 to about 60 micrometers, specifically about 25 to about 55 micrometers, more specifically about 30 to about 50 micrometers, still more specifically about 35 to about 45 micrometers. Volume-average diameter can be determined using conventional particle sizing techniques, including microscopy. Nominal average diameters of hollow glass beads supplied by 3M are determined according to test method 3M QCM 193.0. The hollow glass beads can have a true density of about 0.3 to about 0.5 grams per milliliter, specifically about 0.35 to about 0.45 grams per milliliter, more specifically about 0.35 to about 0.4 grams per milliliter. The term "true density" corresponds to the density of a single glass bead and is contrasted with the bulk density of the glass beads, which is dependent on packing. Nominal true densities of hollow glass beads supplied by 3M are determined according to test method 3M QCM 14.24.1. The hollow glass beads can have an isostatic crush strength of about 30 to about 60 megapascals, specifically about 35 to about 55 megapascals, more specifically about 35 to about 50 megapascals, still more specifically about 35 to about 45 megapascals, yet more specifically about 35 to about 40 megapascals. Isostatic crush strengths can be determined according to ASTM D3102-78(1982), "Practice for Determination of Isostatic Collapse Strength of Hollow Glass Microspheres". Nominal isostatic crush strengths of hollow glass beads supplied by 3M are determined according to test method 3M QCM 14.1.8. The hollow glass beads can, optionally, be surface treated to improve their compatibility with a polyamide-containing matrix. Suitable surface treatment agents include, for example, aminosilanes, epoxysilanes, and the like. When present, the surface treatment agents are typically used in a surface area coverage of about 0.5 to about 20 monolayers. Methods of preparing hollow glass beads are known and described, for example, in U.S. Patent Nos. 3,700,478 to Bingham, 4,391,646 to Howell, 6,531,222 to Tanaka et al., and 6,914,024 to Anderson. Suitable hollow glass beads are also commercially available as, for example, Glass Bubbles K46, Glass Bubbles S38XHS, and Glass Bubbles S38HS, all from 3M. Surface-treated versions, including aminosilane-treated versions, of the foregoing hollow glass beads can also be used. When present, the hollow glass bead can be used in an amount of about 0.5 to about 10 weight percent, based on the total weight of the compatibilized polyamide-poly(arylene ether) blend. Within this range, the amount of hollow glass beads can be about 1 to about 8 weight percent, specifically about 2 to about 6 weight percent.

The compatibilized polyamide-poly(arylene ether) blend can, optionally, include a reinforcing and/or bulking filler. Such fillers include, for example, clay (including nanoclays), kaolin, mica, wollastonite, silica, talc, and combinations thereof. When present, the filler can be used in an amount of about 5 to about 50 weight percent, specifically about 10 to about 40 weight percent, based on the total weight of the compatibilized polyamide-poly(arylene ether) blend.

In some embodiments, the compatibilized polyamide-poly(arylene ether) blend comprises a continuous phase comprising the polyamide and a disperse phase comprising the poly(arylene ether).

In some embodiments, the compatibilized polyamide-poly(arylene ether) blend further includes an impact modifier. Impact modifiers can be block copolymers containing alkenyl aromatic repeating units, for example, A-B diblock copolymers and A-B-A triblock copolymers having of one or two alkenyl aromatic blocks A (blocks having alkenyl aromatic repeating units), which are typically styrene blocks, and a rubber block, B, which is typically an isoprene or butadiene block. The butadiene block can be partially or completely hydrogenated. Mixtures of these diblock and triblock copolymers can also be used as well as mixtures of non-hydrogenated copolymers, partially hydrogenated copolymers, fully hydrogenated copolymers and combinations of two or more of the foregoing. A-B and A-B-A copolymers include, but are not limited to, polystyrene-polybutadiene, polystyrene-poly(ethylene-propylene) (SEP), polystyrene-polyisoprene, poly(α-methylstyrene)-polybutadiene, polystyrene-polybutadiene-polystyrene (SBS), polystyrene-poly(ethylene-butylene)-polystyrene (SEBS), polystyrene-poly(ethylene-propylene)-polystyrene, polystyrene-polyisoprene-polystyrene (SIS), poly(alpha-methylstyrene)-polybutadiene-poly(alpha-methylstyrene), polystyrene-poly(ethylene-propylene-styrene)-polystyrene, and the like. Mixtures of the aforementioned block copolymers are also useful. Such A-B and A-B-A block copolymers are available commercially from a number of sources, including Phillips Petroleum under the trademark SOLPRENE, Kraton Polymers under the trademark KRATON, Dexco under the trademark VECTOR, Asahi Kasai under the trademark TUFTEC, Total Petrochemicals under the trademarks FINAPRENE and FINACLEAR, Dynasol under trademark CALPRENE, and Kuraray under the trademark SEPTON. In one embodiment, the impact modifier comprises polystyrene-poly(ethylene-butylene)-polystyrene, polystyrene-poly(ethylene-propylene) or a combination of the foregoing.

Another type of impact modifier is essentially free of alkenyl aromatic repeating units and comprises one or more moieties selected from the group consisting of carboxylic acid, anhydride, epoxy, oxazoline, and orthoester. Essentially free is defined as having alkenyl aromatic units present in an amount less than 5 weight percent, or, more specifically, less than 3 weight percent, or, even more specifically less than 2 weight percent, based on the total weight of the block copolymer. When the impact modifier comprises a carboxylic acid moiety the carboxylic acid moiety can be neutralized with an ion, preferably a metal ion such as zinc or sodium. It can be an alkylene-alkyl (meth)acrylate copolymer and the alkylene groups can have 2 to 6 carbon atoms and the alkyl group of the alkyl (meth)acrylate can have 1 to 8 carbon atoms. This type of polymer can be prepared by copolymerizing an olefin, for example, ethylene and propylene, with various (meth)acrylate monomers and/or various maleic-based monomers. The term (meth)acrylate refers to both the acrylate as well as the corresponding methacrylate analogue. Included within the term (meth)acrylate monomers are alkyl (meth)acrylate monomers as well as various (meth)acrylate monomers containing at least one of the aforementioned reactive moieties. In a one embodiment, the copolymer is derived from ethylene, propylene, or mixtures of ethylene and propylene, as the alkylene component; butyl acrylate, hexyl acrylate, or propyl acrylate as well as the corresponding alkyl (methyl)acrylates, for the alkyl (meth)acrylate monomer component, with acrylic acid, maleic anhydride, glycidyl methacrylate or a combination thereof as monomers providing the additional reactive moieties (i.e., carboxylic acid, anhydride, epoxy). Exemplary impact modifiers are commercially available from a variety of sources including DuPont under the trademarks ELVALOY PTW, SURLYN, and FUSABOND.

The impact modifiers can be used singly or in combination.

When present, the impact modifier can be used in an amount of about 1 to about 15 weight percent, based on the total weight of the compatibilized polyamide-poly(arylene ether) blend. Within this range, the impact modifier amount can be about 1.5 to about 13 weight percent, specifically about 2 to about 12 weight percent, more specifically about 4 to about 10 weight percent.

In some embodiments, the compatibilized polyamide-poly(arylene ether) blend comprises less than or equal to 1 weight percent, specifically less than or equal to 0.5 weight percent, more specifically less than or equal to 0.1 weight percent, of any impact modifiers. In some embodiments, the compatibilized polyamide-poly(arylene ether) blend excludes impact modifiers.

In some embodiments, the compatibilized polyamide-poly(arylene ether) blend comprises a continuous phase comprising the polyamide and a disperse phase comprising the poly(arylene ether), and the continuous phase excludes impact modifiers.

In some embodiments, the compatibilized polyamide-poly(arylene ether) blend comprises a fluorinated polymer to improve the slidability of the piston guide ring and thus increase the piston sliding speed at which it can be employed. Fluorinated polymers include homopolymers and copolymers of monomers such as vinylidene fluoride, tetrafluoroethylene, hexafluoropropylene, chlorotrifluoroethylene, 2-chloropentafluoropropene, dichlorodifluoroethylene, and 1,1-dichlorofluoroethylene. In some embodiments, the fluorinated polymer comprises tetrafluoroethylene. When present in the compatibilized polyamide-poly(arylene ether) blend, the fluorinated polymer can be used in an amount of about 1 to about 20 weight percent, specifically about 5 to about 15 weight percent, based on the total weight of the compatibilized polyamide-poly(arylene ether) blend.

The compatibilized polyamide-poly(arylene ether) blend can, optionally, further include one or more additives. Additives include, for example, stabilizers, antioxidants, mold release agents, processing aids, flame retardants, drip retardants, nucleating agents, anti-static agents, mineral oil, metal deactivators, antiblocking agents, and combinations thereof. When utilized, such additives are typically utilized in a total amount of less than or equal to 5 weight percent, specifically less than or equal to 3 weight percent, more specifically less than or equal to 1 weight percent, based on the total weight of the compatibilized polyamide-poly(arylene ether) blend.

In some embodiments, the compatibilized polyamide-poly(arylene ether) blend excludes electrically conductive fillers.

In some embodiments, the compatibilized polyamide-poly(arylene ether) blend excludes flame retardants.

In some embodiments, the compatibilized polyamide-poly(arylene ether) blend excludes polyolefins.

In some embodiments, the compatibilized polyamide-poly(arylene ether) blend excludes polyolefins, impact modifiers, electrically conductive fillers, and flame retardants.

In a specific embodiment, the compatibilized polyamide-poly(arylene ether) blend comprises 25 to 45 parts by weight, based on 100 parts by weight total of the polyamide and the poly(arylene ether), of the poly(arylene ether), wherein the poly(arylene ether) is a copolymer of 2,6-dimethylphenol and 2,3,6-trimethylphenol; 40 to 60 parts by weight, based on 100 parts by weight total of the polyamide and the poly(arylene ether), of the polyamide, wherein the polyamide is selected from the group consisting of polyamide-6, polyamide-6,6, and mixtures thereof; and 20 to 40 weight percent, based on the total weight of the compatibilized polyamide-poly(arylene ether) blend, of glass fibers. The poly(arylene ether) comprises a copolymer of 2,6-dimethylphenol and 2,3,6-trimethylphenol. In some embodiments, the compatibilized polyamide-poly(arylene ether) blend exhibits a compressive strength at 5% strain and 100°C of at least 35 megapascals, specifically 35 to about 70 megapascals, more specifically about 38 to about 55 megapascals. In some embodiments, the compatibilized polyamide-poly(arylene ether) blend exhibits a compressive strength at 5% strain and 130°C of at least 30 megapascals, specifically 30 to 50 megapascals, more specifically about 33 to about 40 megapascals. The compatibilized polyamide-poly(arylene ether) blend can, optionally, exclude polyolefins, impact modifiers, electrically conductive fillers, and flame retardants.

In another specific embodiment, the compatibilized polyamide-poly(arylene ether) blend comprises 40 to 60 parts by weight, based on 100 parts by weight total of the polyamide and the poly(arylene ether), of the poly(arylene ether), wherein the poly(arylene ether) is a copolymer of 2,6-dimethylphenol and 2,3,6-trimethylphenol; and 40 to 60 parts by weight, based on 100 parts by weight total of the polyamide and the poly(arylene ether), of the polyamide, wherein the polyamide is selected from the group consisting of polyamide-6, polyamide-6,6, and mixtures thereof; and the compatibilized polyamide-poly(arylene ether) blend excludes glass fibers. The poly(arylene ether) comprises a copolymer of 2,6-dimethylphenol and 2,3,6-trimethylphenol. In some embodiments, the compatibilized polyamide-poly(arylene ether) blend without glass fibers exhibits a compressive strength at 5% strain and 100°C of at least 20 megapascals, specifically 20 to about 35 megapascals, more specifically about 25 to about 30 megapascals. In some embodiments, the compatibilized polyamide-poly(arylene ether) blend without glass fibers exhibits a compressive strength at 5% strain and 130°C of at least 17 megapascals, specifically 17 to about 30 megapascals, more specifically about 19 to about 25 megapascals, even more specifically about 20 to about 25 megapascals. The compatibilized polyamide-poly(arylene ether) blend can, optionally, exclude polyolefins, impact modifiers, electrically conductive fillers, and flame retardants.

The compatibilized polyamide-poly(arylene ether) blend exhibits a desirable combination of compressive strength and stiffness. For example, in come embodiments, the compatibilized polyamide-poly(arylene ether) blend exhibits a compressive strength at 5% strain and 100°C of at least 25 megapascals, specifically about 25 to about 70 megpascals, more specifically about 30 to about 70 megapascals, even more specifically about 35 to about 60 megapascals, yet more specifically about 38 to about 55 megapascals; and a flexural modulus at of at least 2,000 megapascals, specifically 2,000 to about 20,000 megapascals, as measured at 23°C according to ASTM D790-10. When the compatibilized polyamide-poly(arylene ether) blend does not contain glass fibers, the flexural modulus can be about 2,000 to about 4,000 megapascals, specifically about 2,000 to about 3,000 megapascals. When the compatibilized polyamide-poly(arylene ether) blend contains glass fibers, the flexural modulus can be about 6,000 to about 20,000 megapascals, specifically about 7,000 to about 15,000 megapascals, more specifically about 7,500 to about 10,000 megapascals.

The piston guide ring shape and dimensions can vary according to the size and shape of the piston-cylinder assembly in which it is employed. In some embodiments, the piston guide ring comprises a diameter (i.e., outer diameter) of about 20 to about 200 centimeters, specifically about 40 to about 150 centimeters, more specifically about 60 to about 10 centimeters; a width (in the piston-cylinder axis direction) of about 3 to about 30 millimeters, specifically about 5 to about 20 millimeters, more specifically about 7 to about 10 millimeters; and a thickness (spanning the outer diameter and the inner diameter) of about 1 millimeters to about 10 millimeters, specifically about 2 to about 8 millimeters, more specifically about 3 to about 6 millimeters.

Methods of forming guide rings by injection molding followed by machining are known in the art and described, for example, in U.S. Patent No. 6,033,227 to Deppert et al. The method for manufacturing sealing rings described in Lindsten et al., US Patent Application Publication No. US 2006/0099950 A1, can also be utilized to form the guide rings of the present invention.

An illustrative procedure for forming guide rings is as follows. Injection molding is used to form a cylindrical tube having a closed end and an open end. The outer diameter of the tube is slightly larger than the outer diameter of the finished guide rings, and the inner diameter of the tube is slightly smaller than the inner diameter of the finished guide rings. The tube has a length equivalent to about 20 to 40 finished guide rings. The outer surface of the tube is machined to conform to the desired outer diameter of the finished guide rings. The inner surface of the tube is machined to conform to the desired inner diameter of the finished guide rings. The machined tube is then sectioned into guide rings of the desired width.

The invention includes piston-cylinder assemblies comprising the piston guide rings. Thus, one embodiment is a piston-cylinder assembly, comprising: a cylinder comprising a cylinder inner wall, the cylinder inner wall defining a cylinder chamber; a piston slidably disposed within the cylinder chamber, the piston comprising a piston outer wall defining at least one groove in the piston; and at least one piston guide ring mounted in the at least one groove and comprising an outer surface slidably abutting the cylinder inner wall and an inner surface abutting the piston outer wall defining the groove; wherein the piston guide ring comprises a compatibilized polyamide-poly(arylene ether) blend; wherein the compatibilized polyamide-poly(arylene ether) blend comprises 35 to 95 parts by weight polyamide and 5 to 65 parts by weight poly(arylene ether), based on 100 parts by weight total of the polyamide and the poly(arylene ether), wherein the poly(arylene ether) comprises a copolymer of 2,6-dimethylphenol and 2,3,6-trimethylphenol. All of the compositional variations described above in the context of the compatibilized polyamide-poly(arylene ether) blend apply, as well, to the piston guide rings used in the piston-cylinder assembly.

The invention includes at least the following embodiments.

Embodiment 1: A piston guide ring comprising a compatibilized polyamide-poly(arylene ether) blend; wherein the compatibilized polyamide-poly(arylene ether) blend comprises 35 to 95 parts by weight polyamide and 5 to 65 parts by weight poly(arylene ether), based on 100 parts by weight total of the polyamide and the poly(arylene ether), wherein the poly(arylene ether) comprises a copolymer of 2,6-dimethylphenol and 2,3,6-trimethylphenol.

Embodiment 2: The piston guide ring of embodiment 1, wherein the compatibilized polyamide-poly(arylene ether) blend exhibits a compressive strength at 5% strain and 100°C of at least 25 megapascals, and a flexural modulus of at least 2,000 megapascals, as measured at 23°C according to ASTM D790-10.

Embodiment 3: The piston guide ring of embodiment 1 or 2, wherein the compatibilized polyamide-poly(arylene ether) blend exhibits a compressive strength at 5% strain and 130°C of at least 17 megapascals.

Embodiment 4: The piston guide ring of any of embodiments 1-3, wherein the polyamide comprises polyamide-6, polyamide-6,6, or a mixture thereof.

Embodiment 5: The piston guide ring of any of embodiments 1-4, wherein the poly(arylene ether) is a copolymer of 2,6-dimethylphenol and 2,3,6-trimethylphenol, or a mixture of a copolymer of 2,6-dimethylphenol and 2,3,6-trimethylphenol and a homopolymer of 2,6-dimethylphenol.

Embodiment 6: The piston guide ring of any of embodiments 1-5, wherein the compatibilized polyamide-poly(arylene ether) blend further comprises 1 to 50 weight percent glass fibers, based on the total weight of the compatibilized polyamide-poly(arylene ether) blend.

Embodiment 7: The piston guide ring of any of embodiments 1-5, wherein the compatibilized polyamide-poly(arylene ether) blend excludes glass fibers.

Embodiment 8: The piston guide ring of any of embodiments 1-7, wherein the compatibilized polyamide-poly(arylene ether) blend comprises a continuous phase comprising the polyamide and a disperse phase comprising the poly(arylene ether), and wherein the continuous phase excludes impact modifiers.

Embodiment 9: The piston guide ring of any of embodiments 1-8, wherein the compatibilized polyamide-poly(arylene ether) blend excludes impact modifiers.

Embodiment 10: The piston guide ring of any of embodiments 1-90, wherein the compatibilized polyamide-poly(arylene ether) blend excludes electrically conductive fillers.

Embodiment 11: The piston guide ring of any of embodiments 1-10, wherein the compatibilized polyamide-poly(arylene ether) blend excludes flame retardants.

Embodiment 12: The piston guide ring of any of embodiments 1-11, wherein the compatibilized polyamide-poly(arylene ether) blend excludes polyolefins.

Embodiment 13: The piston guide ring of any of embodiments 1-12, having a diameter of about 20 to about 200 centimeters, a width of about 3 to about 30 millimeters, and a thickness of about 1 millimeter to about 10 millimeters.

Embodiment 14: The piston guide ring of embodiment 1, wherein the compatibilized polyamide-poly(arylene ether) blend comprises 25 to 45 parts by weight, based on 100 parts by weight total of the polyamide and the poly(arylene ether), of the poly(arylene ether), wherein the poly(arylene ether) is selected from the group consisting of a copolymer of 2,6-dimethylphenol and 2,3,6-trimethylphenol, and mixtures of a copolymer of 2,6-dimethylphenol and 2,3,6-trimethylphenol and a homopolymer of 2,6-dimethylphenol; 40 to 60 parts by weight, based on 100 parts by weight total of the polyamide and the poly(arylene ether), of the polyamide, wherein the polyamide is selected from the group consisting of polyamide-6, polyamide-6,6, and mixtures thereof; and 20 to 40 weight percent, based on the total weight of the compatibilized polyamide-poly(arylene ether) blend, of glass fibers.

Embodiment 15: The piston guide ring of embodiment 14, wherein the compatibilized polyamide-poly(arylene ether) blend exhibits a compressive strength at 5% strain and 100°C of at least 35 megapascals.

Embodiment 16: The piston guide ring of embodiment 14 or 15, wherein the compatibilized polyamide-poly(arylene ether) blend exhibits a compressive strength at 5% strain and 130°C of at least 30 megapascals.

Embodiment 17: The piston guide ring of any of embodiments 14-16, wherein the compatibilized polyamide-poly(arylene ether) blend excludes polyolefins, impact modifiers, electrically conductive fillers, and flame retardants.

Embodiment 18: The piston guide ring of embodiment 1, wherein the compatibilized polyamide-poly(arylene ether) blend comprises 40 to 60 parts by weight, based on 100 parts by weight total of the polyamide and the poly(arylene ether), of the poly(arylene ether), wherein the poly(arylene ether) is selected from the group consisting of a copolymer of 2,6-dimethylphenol and 2,3,6-trimethylphenol, and mixtures of a copolymer of 2,6-dimethylphenol and 2,3,6-trimethylphenol and a homopolymer of 2,6-dimethylphenol; and 40 to 60 parts by weight, based on 100 parts by weight total of the polyamide and the poly(arylene ether), of the polyamide, wherein the polyamide is selected from the group consisting of polyamide-6, polyamide-6,6, and mixtures thereof; wherein the compatibilized polyamide-poly(arylene ether) blend excludes glass fibers.

Embodiment 19: The piston guide ring of embodiment 18, wherein the compatibilized polyamide-poly(arylene ether) blend exhibits a compressive strength at 5% strain and 100°C of at least 20 megapascals.

Embodiment 20: The piston guide ring of embodiment 18 or 19, wherein the compatibilized polyamide-poly(arylene ether) blend exhibits a compressive strength at 5% strain and 130°C of at least 17 megapascals.

Embodiment 21: The piston guide ring of any of embodiments 18-20, wherein the compatibilized polyamide-poly(arylene ether) blend excludes polyolefins, impact modifiers, electrically conductive fillers, and flame retardants.

Embodiment 22: A piston-cylinder assembly, comprising: a cylinder comprising a cylinder inner wall, the cylinder inner wall defining a cylinder chamber; a piston slidably disposed within the cylinder chamber, the piston comprising a piston outer wall defining at least one groove in the piston; and at least one piston guide ring mounted in the at least one groove and comprising an outer surface slidably abutting the cylinder inner wall and an inner surface abutting the piston outer wall defining the groove; wherein the piston guide ring comprises a compatibilized polyamide-poly(arylene ether) blend; wherein the compatibilized polyamide-poly(arylene ether) blend comprises 35 to 95 parts by weight polyamide and 5 to 65 parts by weight poly(arylene ether), based on 100 parts by weight total of the polyamide and the poly(arylene ether), wherein the poly(arylene ether) comprises a copolymer of 2,6-dimethylphenol and 2,3,6-trimethylphenol.

Embodiment 23: The piston-cylinder assembly of embodiment 22, wherein the compatibilized polyamide-poly(arylene ether) blend comprises 25 to 45 parts by weight, based on 100 parts by weight total of the polyamide and the poly(arylene ether), of the poly(arylene ether), wherein the poly(arylene ether) is selected from the group consisting of a copolymer of 2,6-dimethylphenol and 2,3,6-trimethylphenol, and mixtures of a copolymer of 2,6-dimethylphenol and 2,3,6-trimethylphenol and a homopolymer of 2,6-dimethylphenol; 40 to 60 parts by weight, based on 100 parts by weight total of the polyamide and the poly(arylene ether), of the polyamide, wherein the polyamide is selected from the group consisting of polyamide-6, polyamide-6,6, and mixtures thereof; and 20 to 40 weight percent, based on the total weight of the compatibilized polyamide-poly(arylene ether) blend, of glass fibers.

Embodiment 24: The piston-cylinder assembly of embodiment 22, wherein the compatibilized polyamide-poly(arylene ether) blend comprises 40 to 60 parts by weight, based on 100 parts by weight total of the polyamide and the poly(arylene ether), of the poly(arylene ether), wherein the poly(arylene ether) is selected from the group consisting of a copolymer of 2,6-dimethylphenol and 2,3,6-trimethylphenol, and mixtures of of a copolymer of 2,6-dimethylphenol and 2,3,6-trimethylphenol and a homopolymer of 2,6-dimethylphenol; and 40 to 60 parts by weight, based on 100 parts by weight total of the polyamide and the poly(arylene ether), of the polyamide, wherein the polyamide is selected from the group consisting of polyamide-6, polyamide-6,6, and mixtures thereof; wherein the compatibilized polyamide-poly(arylene ether) blend excludes glass fibers.

The invention is further illustrated by the following non-limiting examples.

### EXAMPLES 1-8, COMPARATIVE EXAMPLE 1

Components used to form the compositions are summarized in Table 1.

**Table 1**

| Component | Description |
|---|---|
| PPE homopolymer | Poly(2,6-dimethyl-1,4-phenylene ether), CAS Reg. No. 24938-67-8, having an intrinsic viscosity of about 0.40 deciliter per gram as measured in chloroform at 25°C; obtained as PPO 640 from SABIC Innovative Plastics. |
| PPE copolymer | Copolymer of 82 weight percent 2,6-dimethylphenol and 18 weight percent 2,3,6-trimethylphenol, having an intrinsic viscosity of about 0.40 deciliter per gram as measured in chloroform at 25°C; obtained as PPO 809 from SABIC Innovative Plastics. |
| Citric acid | Citric acid, CAS Reg. No. 77-92-9; obtained from Intercontinental. |
| Antioxidant | Octadecyl 3,5-di-tert-butyl-4-hydroxyhydrocinnamate, CAS Reg. No.2082-79-3; obtained as IRGANOX 1076 from Everspring. |
| KI solution | A 33 weight percent potassium iodide solution in water; obtained from Deepwater Chemicals. |
| Cuprous acetate | Cuprous acetate, CAS 598-54-9; obtained from Barker Industries. |
| Polyamide-6,6, pellets | Polyamide-6,6, CAS Reg. No. 32131-17-2, having a melting point of about 265°C; obtained as VYDYNE 21Z from Ascend. |
| Polyamide-6,6, ground | Polyamide-6,6, CAS Reg. No. 32131-17-2, having a melting point of about 265°C; obtained as VYDYNE 21Z from Ascend, then ground to form particles smaller than 841 micrometers (i.e., passing through a 20 mesh screen). |
| Glass fibers | Chopped glass fibers having a diameter of about 10 micrometers, a pre-compounded length of about 3.2 millimeters, and a surface treatment for compatibility with polyamide-6 and polyamide-6,6; obtained as CHOPVANTAGE 3540 from PPG Industries. |

Compositions are summarized in Table 2, where component amounts are expressed in parts by weight. The compositions were compounded using a Werner &Pfleiderer twin-screw extruder having an internal diameter of 30 millimeters and four feed ports, and operating at a screw rotation rate of 240 rotations per minute and an approximate throughput of about 18 kilograms per hour (about 40 pounds per hour). For the poly(arylene ether)-containing compositions (Examples 1-8), the barrel temperatures from feed throat to die were 260 / 288 / 288 / 288 / 288 / 260 / 249 / 249 / 249 / 271 °C (500 / 550 / 550 / 550 / 550 / 500 / 480 / 480 / 480 / 520 °F). For Comparative Example 1, which lacks poly(arylene ether), the barrel temperatures from feed throat to die were 204 / 221 / 221 / 221 / 221 / 221 / 221 / 221 / 221 / 232°C (400 / 430 / 430 / 430 / 430 / 430 / 430 / 430 / 430 / 450 °F). For Comparative Example 1, ground polyamide-6,6 and additives were added via the feed throat (i.e., the most upstream feed port), polyamide was added via the first downstream feed port, and glass fibers were added via the third (most) downstream feed port. For Examples 1-4, poly(arylene ether) and additives were added via the feed throat (i.e., the most upstream feed port), polyamide-6,6 was added via the first downstream feed port, and glass fibers were added via the third (most) downstream feed port. For Examples 5-8, poly(arylene ether) and additives were added via the feed throat (i.e., the most upstream feed port), and polyamide-6,6 was added via the first downstream feed port. The extrudate was pelletized and dried at 220°C for three hours prior to use for injection molding.

Table 2 also summarizes properties of the compositions. Test samples for physical property testing were injection molded on a Van Dorn 120T injection molding machine. For the poly(arylene ether)-containing compositions of Examples 1-8, the barrel temperature was 299°C (570°F), and the mold temperature was 88°C (190°F). For Comparative Example 1, which lacks poly(arylene ether), the barrel temperature was 277°C (530°F), and the mold temperature was 88°C (190°F). Melt volume-flow rate (MVR) values, expressed in units of cubic centimeters per 10 minutes, were measured at 280°C and 5 kilogram load according to ISO 1133 : 2005. Heat deflection temperature (HDT) values, expressed in degrees centigrade, were measured at a sample thickness of 6.35 millimeters (0.25 inch) and a load of 1.82 megapascals (264 pounds per square inch) according to ASTM D648-07, Method B. Notched Izod impact strength values, expressed in units of joules per meter, were measured at 23°C according to ASTM D256-10. Flexural modulus and flexural stress at yield, each expressed in units of megapascals, were measured at 23°C and a sample thickness of 6.35 millimeters (0.25 inch) according to ASTM D790-10. In-flow and cross-flow shrinkage, expressed in units of percent, were determined by injection molding plaque samples having dimensions of 5 centimeters in the in-flow direction, 5 centimeters in the cross-flow direction, and a thickness of 2 millimeters, conditioning the molded samples for 24 hours at 23°C and 50% relative humidity, and measuring the shrinkage of the molded part relative to the mold. Estimated moisture absorption, expressed in units of weight percent, was calculated by multiplying the weight fraction of polyamide-6,6 by the value of 8.4% for neat polyamide-6,6 after 89 days at 100% relative humidity and 23°C.

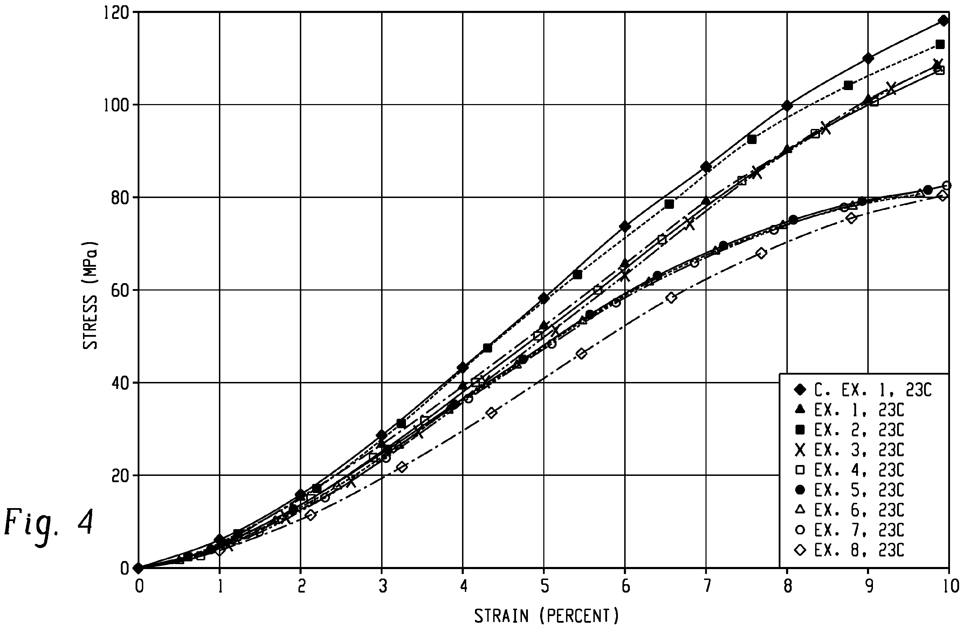

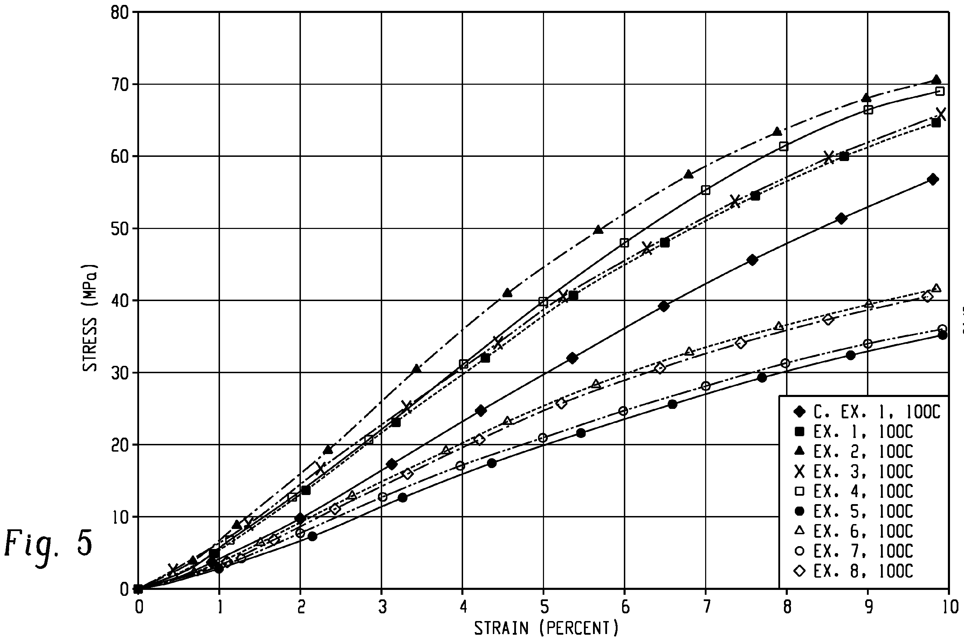

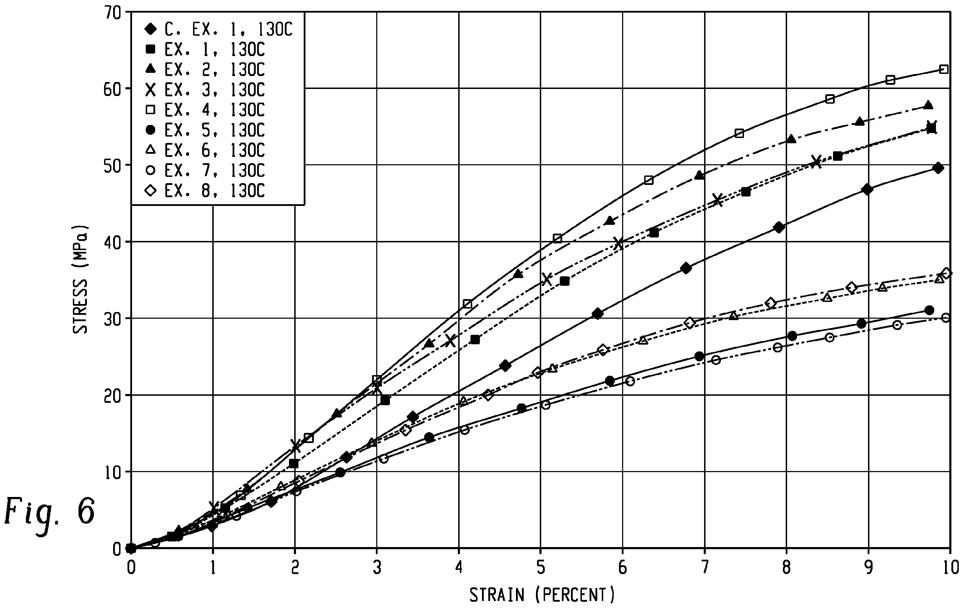

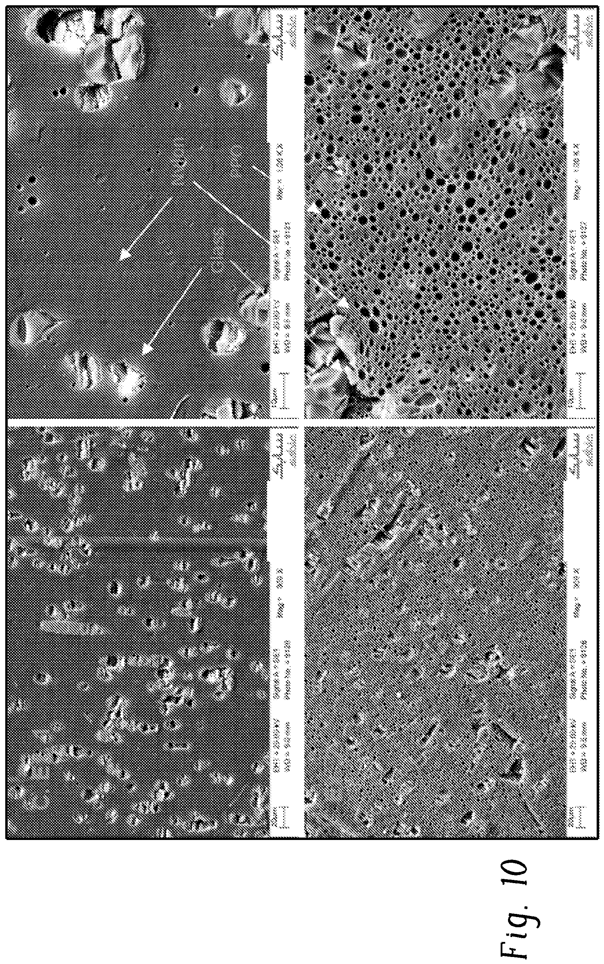

Uniaxial compressive strength values were determined at 50% relative humidity and 23, 100, and 130°C with a Zwick Z010 universal testing machine. Test samples are injection molded cylinders having a 6 millimeter diameter and a 6 millimeter height. Before testing, samples are conditioned at 23°C and 50% relative humidity for 48 hours (ISO 291). During testing, the samples are subjected to a compressive load against the parallel faces of the cylinder ends. The test speed is 1 millimeter per minute. During the test the load and deflection (strain) data are recorded. The test is ended when the strain reaches 50%. Three samples per composition are tested, and results averaged to yield the results displayed in Figures 4-6 (showing data for strains of 0-10%) and 7-9 (showing data for strains of 0-50%). Compressive strength is calculated as F/A, where F is the load applied (expressed in Newtons) and A is the area of one end of the cylinder (expressed in square-millimeters. Compressive strength values calculated at 5% strain are presented in Table 2. Figure 10 consists of scanning electron micrographs of Comparative Example 1 (images (a) and (b) at different magnifications) and Example 1 (images (c) and (d) at different magnifications). Cross sections of glass fibers are evident in all images. The poly(arylene ether) disperse phase is evident in images (c) and (d) for Example 1.

The results in Table 2 show the glass-filled polyamide-poly(arylene ether) blends of Examples 1-4 exhibit higher compressive strengths at elevated temperatures (100 and 130°C) than the corresponding glass-filled polyamide of Comparative Example 1, which lacks poly(arylene ether). The highest compressive strengths were exhibited by the Example 3 and 4 blends containing poly(arylene ether) copolymer. Examples 1-4 also exhibit more isotropic shrinkage than Comparative Example 1.

The unfilled polyamide-poly(arylene ether) blends of Examples 5-8 exhibit good compressive strength, low moisture absorption, and relatively isotropic shrinkage, making them good candidates for light-duty and medium-duty piston guide rings formed in processes without secondary (post-molding) operations.

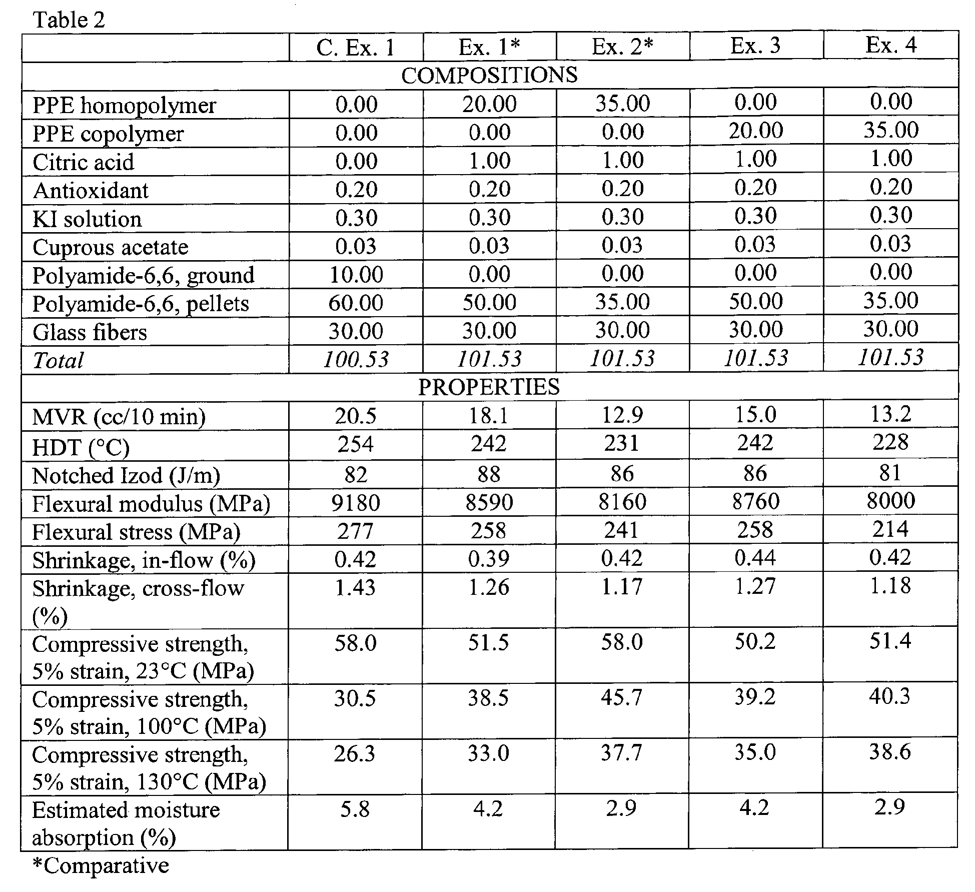

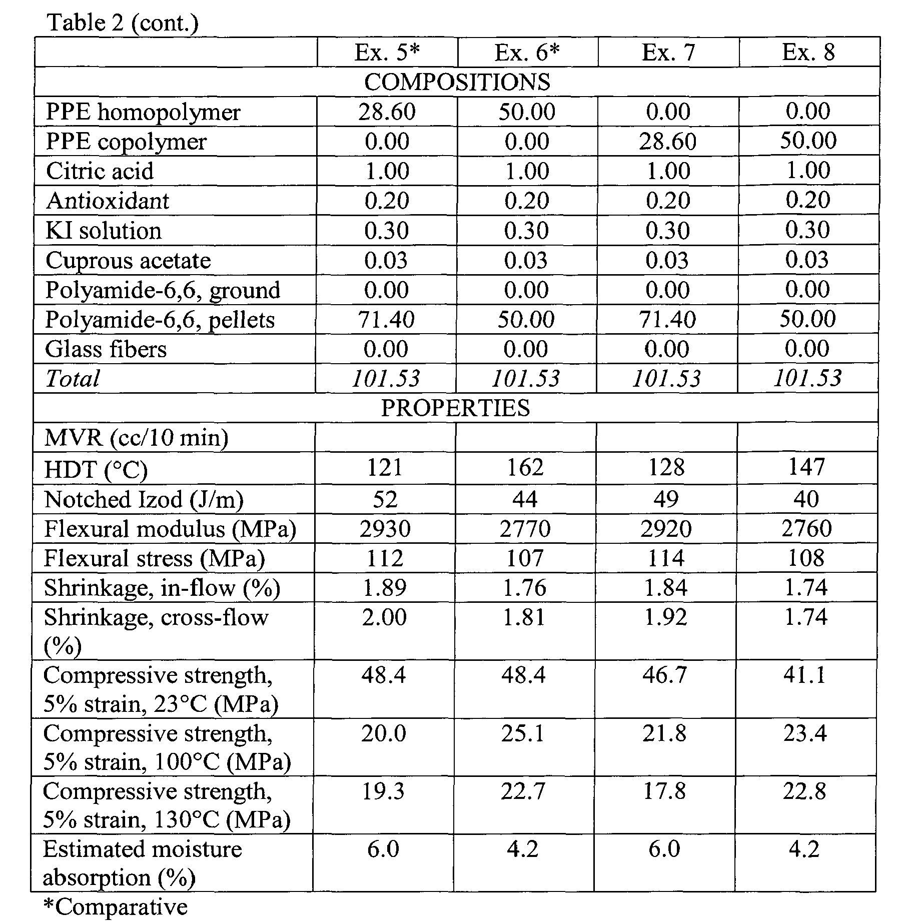

This written description uses examples to disclose the invention, including the best mode, and also to enable any person skilled in the art to make and use the invention. The patentable scope of the invention is defined by the claims.

All ranges disclosed herein are inclusive of the endpoints, and the endpoints are independently combinable with each other. Each range disclosed herein constitutes a disclosure of any point or sub-range lying within the disclosed range.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

## Claims

1. A piston guide ring comprising a compatibilized polyamide-poly(arylene ether) blend; wherein the compatibilized polyamide-poly(arylene ether) blend comprises 35 to 95 parts by weight polyamide and 5 to 65 parts by weight poly(arylene ether), based on 100 parts by weight total of the polyamide and the poly(arylene ether); wherein the poly(arylene ether) comprises a copolymer of 2,6-dimethylphenol and 2,3,6-trimethylphenol.

2. The piston guide ring of claim 1, wherein the compatibilized polyamide-poly(arylene ether) blend further comprises 1 to 50 weight percent glass fibers, based on the total weight of the compatibilized polyamide-poly(arylene ether) blend.

3. The piston guide ring of claim 1, wherein the compatibilized polyamide-poly(arylene ether) blend excludes glass fibers.

4. The piston guide ring of any of claims 1-3, wherein the compatibilized polyamide-poly(arylene ether) blend comprises a continuous phase comprising the polyamide and a disperse phase comprising the poly(arylene ether), and wherein the continuous phase excludes impact modifiers.

5. The piston guide ring of any of claims 1-4, wherein the compatibilized polyamide-poly(arylene ether) blend excludes impact modifiers.

6. The piston guide ring of claim 1, wherein the compatibilized polyamide-poly(arylene ether) blend comprises
25 to 45 parts by weight, based on 100 parts by weight total of the polyamide and the poly(arylene ether), of the poly(arylene ether), wherein the poly(arylene ether) is a copolymer of 2,6-dimethylphenol and 2,3,6-trimethylphenol;
40 to 60 parts by weight, based on 100 parts by weight total of the polyamide and the poly(arylene ether), of the polyamide, wherein the polyamide is selected from the group consisting of polyamide-6, polyamide-6,6, and mixtures thereof; and
20 to 40 weight percent, based on the total weight of the compatibilized polyamide-poly(arylene ether) blend, of glass fibers.

7. The piston guide ring of claim 6, wherein the compatibilized polyamide-poly(arylene ether) blend excludes polyolefins, impact modifiers, electrically conductive fillers, and flame retardants.

8. The piston guide ring of claim 1, wherein the compatibilized polyamide-poly(arylene ether) blend comprises
40 to 60 parts by weight, based on 100 parts by weight total of the polyamide and the poly(arylene ether), of the poly(arylene ether), wherein the poly(arylene ether) is a copolymer of 2,6-dimethylphenol and 2,3,6-trimethylphenol; and
40 to 60 parts by weight, based on 100 parts by weight total of the polyamide and the poly(arylene ether), of the polyamide, wherein the polyamide is selected from the group consisting of polyamide-6, polyamide-6,6, and mixtures thereof;
wherein the compatibilized polyamide-poly(arylene ether) blend excludes glass fibers.

9. The piston guide ring of claim 8, wherein the compatibilized polyamide-poly(arylene ether) blend excludes polyolefins, impact modifiers, electrically conductive fillers, and flame retardants.

10. A piston-cylinder assembly, comprising:
a cylinder comprising a cylinder inner wall, the cylinder inner wall defining a cylinder chamber;
a piston slidably disposed within the cylinder chamber, the piston comprising a piston outer wall defining at least one groove in the piston; and
at least one piston guide ring mounted in the at least one groove and comprising an outer surface slidably abutting the cylinder inner wall and an inner surface abutting the piston outer wall defining the groove;
wherein the piston guide ring comprises a compatibilized polyamide-poly(arylene ether) blend; wherein the compatibilized polyamide-poly(arylene ether) blend comprises 35 to 95 parts by weight polyamide and 5 to 65 parts by weight poly(arylene ether), based on 100 parts by weight total of the polyamide and the poly(arylene ether); and wherein the poly(arylene ether) comprises a copolymer of 2,6-dimethylphenol and 2,3,6-trimethylphenol.

11. The piston-cylinder assembly of claim 10, wherein the compatibilized polyamide-poly(arylene ether) blend comprises
25 to 45 parts by weight, based on 100 parts by weight total of the polyamide and the poly(arylene ether), of the poly(arylene ether), wherein the poly(arylene ether) is a copolymer of 2,6-dimethylphenol and 2,3,6-trimethylphenol;
40 to 60 parts by weight, based on 100 parts by weight total of the polyamide and the poly(arylene ether), of the polyamide, wherein the polyamide is selected from the group consisting of polyamide-6, polyamide-6,6, and mixtures thereof; and
20 to 40 weight percent, based on the total weight of the compatibilized polyamide-poly(arylene ether) blend, of glass fibers.

12. The piston-cylinder assembly of claim 10, wherein the compatibilized polyamide-poly(arylene ether) blend comprises
40 to 60 parts by weight, based on 100 parts by weight total of the polyamide and the poly(arylene ether), of the poly(arylene ether), wherein the poly(arylene ether) is a copolymer of 2,6-dimethylphenol and 2,3,6-trimethylphenol; and
40 to 60 parts by weight, based on 100 parts by weight total of the polyamide and the poly(arylene ether), of the polyamide, wherein the polyamide is selected from the group consisting of polyamide-6, polyamide-6,6, and mixtures thereof;
wherein the compatibilized polyamide-poly(arylene ether) blend excludes glass fibers.

## Patentansprüche

1. Kolbenführungsring, umfassend eine kompatibilisierte Polyamid-Poly(arylenether)-Mischung; wobei die kompatibiliserte Polyamid-Poly(arylenether)-Mischung 35 bis 95 Gewichtsteile Polyamid und 5 bis 65 Gewichtsteile Poly(arylenether) umfasst, bezogen auf 100 Gewichtsteile insgesamt des Polyamids und des Poly(arylenether)s; wobei der Poly(arylenether) ein Copolymer von 2,6-Dimethylphenol und 2,3,6-Trimethylphenol umfasst.

2. Kolbenführungsring nach Anspruch 1, wobei die kompatibilisierte Polyamid-Poly(arylenether)-Mischung weiterhin 1 bis 50 Gewichtsprozent Glasfasern, bezogen auf das Gesamtgewicht der kompatibilisierten Polyamid-Poly(arylenether)-Mischung, umfasst.

3. Kolbenführungsring nach Anspruch 1, wobei die kompatibilisierte Polyamid-Poly(arylenether)-Mischung Glasfasern ausschließt.

4. Kolbenführungsring nach irgendeinem der Ansprüche 1 bis 3, wobei die kompatibilisierte Polyamid-Poly(arylenether)-Mischung eine das Polyamid umfassende kontinuierliche Phase und eine den Poly(arylenether) umfassende disperse Phase umfasst, und wobei die kontinuierliche Phase Schlagzähmodifizierer ausschließt.

5. Kolbenführungsring nach irgendeinem der Ansprüche 1 bis 4, wobei die kompatibilisierte Polyamid-Poly(arylenether)-Mischung Schlagzähmodifizierer ausschließt.

6. Kolbenführungsring nach Anspruch 1, wobei die kompatibilisierte Polyamid-Poly(arylenether)-Mischung umfasst
25 bis 45 Gewichtsteile des Poly(arylenether)s, bezogen auf 100 Gewichtsteile insgesamt des Polyamids und des Poly(arylenether)s, wobei der Poly(arylenether) ein Copolymer von 2,6-Dimethylphenol und 2,3,6-Trimethylphenol ist;
40 bis 60 Gewichtsteile des Polyamids, bezogen auf 100 Gewichtsteile insgesamt des Polyamids und des Poly(arylenether)s, wobei das Polyamid aus der Gruppe bestehend aus Polyamid-6, Polyamid-6,6, und Gemischen davon ausgewählt ist; und
20 bis 40 Gewichtsprozent Glasfasern, bezogen auf das Gesamtgewicht der kompatibilisierten Polyamid-Poly(arylenether)-Mischung.

7. Kolbenführungsring nach Anspruch 6, wobei die kompatibilisierte Polyamid-Poly(arylenether)-Mischung Polyolefine, Schlagzähmodifizierer, elektrisch leitende Füllstoffe, und Flammschutzmittel ausschließt.

8. Kolbenführungsring nach Anspruch 1, wobei die kompatibilisierte Polyamid-Poly(arylenether)-Mischung umfasst
40 bis 60 Gewichtsteile des Poly(arylenether)s, bezogen auf 100 Gewichtsteile insgesamt des Polyamids und des Poly(arylenether)s, wobei der Poly(arylenether) ein Copolymer von 2,6-Dimethylphenol und 2,3,6-Trimethylphenol ist; und
40 bis 60 Gewichtsteile des Polyamids, bezogen auf 100 Gewichtsteile insgesamt des Polyamids und des Poly(arylenether)s, wobei das Polyamid aus der Gruppe bestehend aus Polyamid-6, Polyamid-6,6, und Gemischen davon ausgewählt ist;
wobei die kompatibilisierte Polyamid-Poly(arylenether)-Mischung Glasfasern ausschließt.

9. Kolbenführungsring nach Anspruch 8, wobei die kompatibilisierte Polyamid-Poly(arylenether)-Mischung Polyolefine, Schlagzähmodifizierer, elektrisch leitende Füllstoffe, und Flammschutzmittel ausschließt.

10. Kolben-Zylinder-Anordnung, umfassend:
einen Zylinder, der eine Zylinderinnenwand umfasst, wobei die Zylinderinnenwand eine Zylinderkammer definiert;
einen innerhalb der Zylinderkammer verschiebbar angeordneten Kolben, wobei der Kolben eine Kolbenaußenwand umfasst, welche wenigstens einen Einschnitt bzw. eine Nut in dem Kolben definiert; und
wenigstens einen Kolbenführungsring, der in dem wenigstens einen Einschnitt montiert ist und eine Außenoberfläche, die verschiebbar an die Zylinderinnenwand angrenzt, und eine Innenoberfläche, die an die Kolbenaußenwand angrenzt, welche den Einschnitt definiert, umfasst;
wobei der Kolbenführungsring eine kompatibilisierte Polyamid-Poly(arylenether)-Mischung umfasst; wobei die kompatibilisierte Polyamid-Poly(a-rylenether)-Mischung 35 bis 95 Gewichtsteile Polyamid und 5 bis 65 Gewichtsteile Poly(arylenether) umfasst, bezogen auf 100 Gewichtsteile insgesamt des Polyamids und des Poly(arylenether)s; und wobei der Poly(arylenether) ein Copolymer von 2,6-Dimethylphenol und 2,3,6-Trimethylphenol umfasst.

11. Kolben-Zylinder-Anordnung nach Anspruch 10, wobei die kompatibilisierte Polyamid-Poly(arylenether)-Mischung umfasst 25 bis 45 Gewichtsteile des Poly(arylenether)s, bezogen auf 100 Gewichtsteile insgesamt des Polyamids und des Poly(arylenether)s, wobei der Poly(arylenether) ein Copolymer von 2,6-Dimethylphenol und 2,3,6-Trimethylphenol ist;
40 bis 60 Gewichtsteile des Polyamids, bezogen auf 100 Gewichtsteile insgesamt des Polyamids und des Poly(arylenether)s, wobei das Polyamid aus der Gruppe bestehend aus Polyamid-6, Polyamid-6,6, und Gemischen davon ausgewählt ist; und
20 bis 40 Gewichtsprozent Glasfasern, bezogen auf das Gesamtgewicht der kompatibilisierten Polyamid-Poly(arylenether)-Mischung.

12. Kolben-Zylinder-Anordnung nach Anspruch 10, wobei die kompatibilisierte Polyamid-Poly(arylenether)-Mischung umfasst 40 bis 60 Gewichtsteile des Poly(arylenether)s, bezogen auf 100 Gewichtsteile insgesamt des Polyamids und des Poly(arylenether)s, wobei der Poly(arylenether) ein Copolymer von 2,6-Dimethylphenol und 2,3,6-Trimethylphenol ist; und
40 bis 60 Gewichtsteile des Polyamids, bezogen auf 100 Gewichtsteile insgesamt des Polyamids und des Poly(arylenether)s, wobei das Polyamid aus der Gruppe bestehend aus Polyamid-6, Polyamid-6,6, und Gemischen davon ausgewählt ist;
wobei die kompatibilisierte Polyamid-Poly(arylenether)-Mischung Glasfasern ausschließt.

## Revendications

1. Anneau de guidage de piston, comprenant un mélange polyamide-poly(arylène éther) compatibilisé, le mélange polyamide-poly(arylène éther) compatibilisé comprenant 35 à 95 parties en poids de polyamide et 5 à 65 parties en poids de poly(arylène éther) pour 100 parties en poids du total du polyamide et du poly(arylène éther) ; le poly(arylène éther) comprenant un copolymère de 2,6-diméthylphénol et de 2,3,6-triméthylphénol.

2. Anneau de guidage de piston selon la revendication 1, dans lequel le mélange polyamide-poly(arylène éther) compatibilisé comprend en outre 1 à 50 pourcents en poids de fibres de verre, par rapport au poids total du mélange polyamide-poly(arylène éther) compatibilisé.

3. Anneau de guidage de piston selon la revendication 1, dans lequel le mélange polyamide-poly(arylène éther) compatibilisé ne contient pas de fibres de verre.

4. Anneau de guidage de piston selon l'une quelconque des revendications 1 à 3, dans lequel le mélange polyamide-poly(arylène éther) compatibilisé comprend une phase continue comprenant le polyamide et une phase dispersée comprenant le poly(arylène éther), et dans lequel la phase continue ne contient pas de modifiants choc.

5. Anneau de guidage de piston selon l'une quelconque des revendications 1 à 4, dans lequel le mélange polyamide-poly(arylène éther) compatibilisé ne contient pas de modifiants choc.

6. Anneau de guidage de piston selon la revendication 1, dans lequel le mélange polyamide-poly(arylène éther) compatibilisé comprend :
25 à 45 parties en poids, pour 100 parties en poids du total du polyamide et du poly(arylène éther), du poly(arylène éther), le poly(arylène éther) étant un copolymère de 2,6-diméthylphénol et de 2,3,6-triméthylphénol ;
40 à 60 parties en poids, pour 100 parties en poids du total du polyamide et du poly(arylène éther), du polyamide, le polyamide étant choisi dans le groupe consistant en le polyamide-6, le polyamide-6,6 et les mélanges de ceux-ci ; et
20 à 40 pourcents en poids, par rapport au poids total du mélange polyamide-poly(arylène éther) compatibilisé, de fibres de verre.

7. Anneau de guidage de piston selon la revendication 6, dans lequel le mélange polyamide-poly(arylène éther) compatibilisé ne contient pas de polyoléfines, de modifiants choc, de charges conductrices de l'électricité et de retardateurs de flamme.

8. Anneau de guidage de piston selon la revendication 1, dans lequel le mélange polyamide-poly(arylène éther) compatibilisé comprend :
40 à 60 parties en poids, pour 100 parties en poids du total du polyamide et du poly(arylène éther), du poly(arylène éther), le poly(arylène éther) étant un copolymère de 2,6-diméthylphénol et de 2,3,6-triméthylphénol ; et
40 à 60 parties en poids, pour 100 parties en poids du total du polyamide et du poly(arylène éther), du polyamide, le polyamide étant choisi dans le groupe consistant en le polyamide-6, le polyamide-6,6 et les mélanges de ceux-ci ;
dans lequel le mélange polyamide-poly(arylène éther) compatibilisé ne contient pas de fibres de verre.

9. Anneau de guidage de piston selon la revendication 8, dans lequel le mélange polyamide-poly(arylène éther) compatibilisé ne contient pas de polyoléfines, de modifiants choc, de charges conductrices de l'électricité et de retardateurs de flamme.

10. Ensemble piston-cylindre, comprenant :
un cylindre comprenant une paroi intérieure de cylindre, la paroi intérieure de cylindre définissant une chambre de cylindre ;
un piston disposé avec possibilité de coulissement à l'intérieur de la chambre de cylindre, le piston comprenant une paroi extérieure de piston définissant au moins une gorge dans le piston ; et
au moins un anneau de guidage de piston, monté dans la ou les gorges et comprenant une surface extérieure en aboutement avec possibilité de coulissement avec la paroi intérieure du cylindre et une surface intérieure en aboutement avec la paroi extérieure du piston définissant la gorge ;
dans lequel l'anneau de guidage de piston comprend un mélange polyamide-poly(arylène éther) compatibilisé, le mélange polyamide-poly(arylène éther) compatibilisé comprend 35 à 95 parties en poids de polyamide et 5 à 65 parties en poids de poly(arylène éther) pour 100 parties en poids du total du polyamide et du poly(arylène éther) ; et dans lequel le poly(arylène éther) comprend un copolymère de 2,6-diméthylphénol et de 2,3,6-triméthylphénol.

11. Ensemble piston-cylindre selon la revendication 10, dans lequel le mélange polyamide-poly(arylène éther) compatibilisé comprend
25 à 45 parties en poids, pour 100 parties en poids du total du polyamide et du poly(arylène éther), du poly(arylène éther), le poly(arylène éther) étant un copolymère de 2,6-diméthylphénol et de 2,3,6-triméthylphénol ;
40 à 60 parties en poids, pour 100 parties en poids du total du polyamide et du poly(arylène éther), du polyamide, le polyamide étant choisi dans le groupe consistant en le polyamide-6, le polyamide-6,6 et les mélanges de ceux-ci ; et
20 à 40 pourcents en poids, par rapport au poids total du mélange polyamide-poly(arylène éther) compatibilisé, de fibres de verre.

12. Ensemble piston-cylindre selon la revendication 10, dans lequel le mélange polyamide-poly(arylène éther) compatibilisé comprend
40 à 60 parties en poids, pour 100 parties en poids du total du polyamide et du poly(arylène éther), du poly(arylène éther), le poly(arylène éther) étant un copolymère de 2,6-diméthylphénol et de 2,3,6-triméthylphénol ; et
40 à 60 parties en poids, pour 100 parties en poids du total du polyamide et du poly(arylène éther), du polyamide, le polyamide étant choisi dans le groupe consistant en le polyamide-6, le polyamide-6,6 et les mélanges de ceux-ci ;
dans lequel le mélange polyamide-poly(arylène éther) compatibilisé ne contient pas de fibres de verre.
